(19) Europäisches Patentamt
European Patent Office
Office européen des brevets

(11) **EP 2 454 559 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **10732903.9**

(22) Anmeldetag: **05.07.2010**

(51) Int Cl.:
**G01D 5/244** *(2006.01)*

(86) Internationale Anmeldenummer:
**PCT/EP2010/059535**

(87) Internationale Veröffentlichungsnummer:
**WO 2011/006786 (20.01.2011 Gazette 2011/03)**

(54) **VERFAHREN ZUR PLAUSIBILITÄTSPRÜFUNG VON DIGITALEN MESSSIGNALEN**

METHOD FOR CHECKING PLAUSIBILITY OF DIGITAL MEASUREMENT SIGNALS

PROCÉDÉ POUR VÉRIFIER LA PLAUSIBILITÉ DE SIGNAUX DE MESURE NUMÉRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **13.07.2009 DE 102009032845**

(43) Veröffentlichungstag der Anmeldung:
**23.05.2012 Patentblatt 2012/21**

(73) Patentinhaber: **Siemens Aktiengesellschaft 80333 München (DE)**

(72) Erfinder: **IDIART, Marco Enrique 76185 Karlsruhe (DE)**

(56) Entgegenhaltungen:
**WO-A2-2008/050323 US-A1- 2008 208 946**

**Beschreibung**

Die Erfindung betrifft ein Verfahren zur Plausibilitätsprüfung von digitalen Messsignalen in technischen Systemen.

In technischen Systemen werden zunehmend Überwachungs- und Diagnosefunktionen integriert, um Fehler aber auch bedenkliche Zustände zu erfassen, die selbst noch keinen Fehler darstellen, sich aber zu einem solchen entwickeln können. Im erstgenannten Fall wird eine Fehlermeldung, im zweitgenannten Fall eine Warnmeldung erzeugt. Die Warnmeldung kann sofort ausgegeben oder mit weiteren Kriterien verknüpft werden, die erfüllt sein müssen, bevor die Warnmeldung ausgegeben wird. Technische Systeme sind solche der Mess-, Steuerungs- und Regeltechnik, beispielsweise Prozessautomatisierungssysteme, in denen Sensoren oder Messumformer analoge physikalische oder chemische Größen erfassen, die in digitale Messsignale umgesetzt und weiterverarbeitet werden.

Zur Plausibilisierung der Messsignale kann z. B. ihr zeitlicher Verlauf oder Frequenzspektrum analysiert werden und mit einem zu erwartenden Verlauf oder Frequenzspektrum verglichen werden. Der damit verbundene Aufwand, z. B Fourier-Analyse, kann erheblich sein. Demgegenüber ist beispielsweise die Überwachung der erhaltenen Messwerte auf Über- oder Unterschreiten von maximalen oder minimalen Grenzwerten sehr einfach zu realisieren, liefert jedoch nur grobe Angaben für eine Plausibilisierung von Messsignalen. In allen genannten Fällen ist eine Kenntnis des zu erwartenden störungsfreien Messsignalverlaufs, des Frequenzspektrums oder des Messwertebereichs notwendig.

Der Erfindung liegt die Aufgabe zugrunde, eine aufwandsarme Plausibilitätsprüfung von digitalen Messsignalen in technischen Systemen ohne spezielle Kenntnisse über die Messsignaleigenschaften zu ermöglichen.

Gemäß der Erfindung wird die Aufgabe durch das in Anspruch 1 oder alternativ Anspruch 2 definierte Verfahren gelöst.

Vorteilhafte Weiterbildungen des erfindungsgemäßen Verfahrens sind in den Unteransprüchen angegeben.

Gegenstand der Erfindung nach Anspruch 1 ist somit ein Verfahren zur Plausibilitätsprüfung von digitalen Messsignalen in technischen Systemen mit folgenden Schritten:

- Bildung einer Trendfunktion für eine vorgegebene Anzahl von aufeinanderfolgenden Messwerten des Messsignals (S),
- Bestimmung der Differenzwerte zwischen den Messwerten und der Trendfunktion,
- falls die führende Ziffer mindestens eines Differenzwerts gleich Null ist, Multiplizieren aller Differenzwerte mit einem Faktor, so dass die führenden Ziffern aller Differenzwerte ungleich Null sind,
- Ermittlung einer Abweichung zwischen der Häufigkeitsverteilung der k ($k \geq 1$) führenden Ziffern der Differenzwerte und der Häufigkeitsverteilung nach dem Benfordschen Gesetz, und
- Erzeugen einer Warnmeldung, wenn die Abweichung einen Grenzwert übersteigt.

Entsprechend Anspruch 2 kann anstelle der Skalierung (Multiplikation) der Differenzwerte die höchstwertige Ziffernstelle ermittelt werden, an der die Ziffern aller Differenzwerte ungleich Null sind. Die Häufigkeitsverteilung der k ($k \geq 1$) führenden Ziffern der Differenzwerte wird dann von der ermittelten höchstwertigen Ziffernstelle ab ermittelt und mit der Benford-Verteilung verglichen.

Stellvertretend für die vielen Publikationen über das Benfordsche Gesetz oder Benfords Gesetz wird auf die Erläuterungen bei Wikipedia, gefunden am 03.07.2009 im Internet unter: http://de.wikipedia.org/wiki/Benfordsches_ Gesetz verwiesen.

Bekannte Anwendungen des Benfordschen Gesetzes finden sich in der Finanz-, Betriebs- und Versicherungswirtschaft zu Plausibilisierung von Datensätzen um z. B. Rechnungslegungsdaten eines Unternehmens im Rahmen der Wirtschaftsprüfung auf Ordnungsmäßigkeit zu prüfen, siehe z.B. US 2008/0208946 A1.

Der Erfindung liegt die überraschende Erkenntnis zugrunde, dass auch digitale Messsignale in technischen Systemen unter Verwendung des Benfordschen Gesetzes auf Plausibilität überprüft werden können. Voraussetzung ist, dass die untersuchten Daten der Benford-Verteilung gehorchen. Die zu untersuchenden Messwerte dürfen also nicht durch Rundung, Formatierung, Messwertbegrenzung oder durch sonstige Weise vorverarbeitet werden, die die statistische Verteilung ihrer Ziffern verändert. Vorzugsweise werden daher die unmittelbar nach Digitalisierung des analogen Roh-Messsignals erhaltenen digitalen Roh-Messwerte verwendet. Weiterhin ist wichtig, dass die Auflösung der Messwerte, also die Anzahl der Ziffernstellen, ausreichend hoch ist.

Da sich die Messwerte üblicherweise in einem bestimmten Wertebereich bewegen (z. B. Temperaturmesswerte im Bereich 15°C bis 25°C), werden nicht die Messwerte selbst sondern ihre Abweichungen (Differenzwerte) von einer Trendfunktion untersucht. Im einfachsten Fall, nämlich bei stationären Messsignalen, kann als Trendfunktion der arithmetische Mittelwert aus der vorgegebenen Anzahl von aufeinander folgenden Messwerten verwendet werden. Bei dynamischen Messsignalen wird die Anzahl der für die Mittelwertbildung herangezogenen Messwerte verkürzt oder es erfolgt eine gleitende Mittelwertbildung. Weitere Möglichkeiten zur Trendbereinigung der Messwerte ist die Bildung von Differenzen zwischen aufeinander folgenden Messwerten, die Approximation der Messwertefolge durch Polynome und deren Subtraktion von den Messwerten. Unter Nutzung der Skaleninvarianz als Voraussetzung für eine Benford-Verteilung, werden z. B. die Differenzwerte derart skaliert, dass führenden Ziffern aller Differenzwerte ungleich Null sind. Dann ist eine Benford-Analyse möglich.

Zur kontinuierlichen Überwachung des Messsignals wird die Plausibilitätsprüfung nach jedem N-ten (N ≥ 1) Messwert unter Hinzunahme der N neuen Messwerte und unter Weglassung der jeweils N ältesten Messwerte wiederholt.

Bei Untersuchungen an realen Messsignalen hat sich herausgestellt, dass in vielen Fällen die Benford-Analyse auf die höchstwertige Ziffer, d. h. k = 1, und im Weiteren, bei ausreichend großer Basis des Zahlensystems, auf wenige niedrigste Ziffernwerte oder sogar den niedrigsten Ziffernwert beschränkt werden kann. So kann z. B. bei Darstellung der digitalen Messwerte im Dezimalsystem (Basis 10) nur die Häufigkeit der führenden Ziffer mit dem Wert "1" mit der entsprechenden Häufigkeit nach Benford verglichen werden, so dass für eine Messreihe nur eine einzige Vergleichsoperation erforderlich ist.

Neben den führenden Ziffern können auch die Endziffern weitere Hinweise hinsichtlich der Richtigkeit/Plausibilität des Messsignals geben. So können z. B. Hardwaredefekte erkannt werden, die zur Minderung der Auflösung der digitalen Messwerte führen. Aus diesem Grund wird die Plausibilitätsprüfung vorzugsweise auch auf die k' (k' ≥ 1) letzten Ziffern der Messwerte oder Differenzwerte erweitert.

Zur weiteren Erläuterung der Erfindung wird im Folgenden auf die Zeichnung Bezug genommen, in der

Figur 1      ein Beispiel für einen Messumformer mit Mitteln zur Plausibilitätsprüfung eines erfassten und digitalisierten Messsignals,

Figur 2      ein Flussdiagramm zur Veranschaulichung eines Beispiels für die erfindungsgemäße Plausibilitätsprüfung und

Figur 3      ein Beispiel für die Ermittlung der Abweichung zwischen der sich aus der Messung ergebenden Häufigkeitsverteilung der führenden Ziffern und der Häufigkeitsverteilung nach dem Benfordschen Gesetz zeigen.

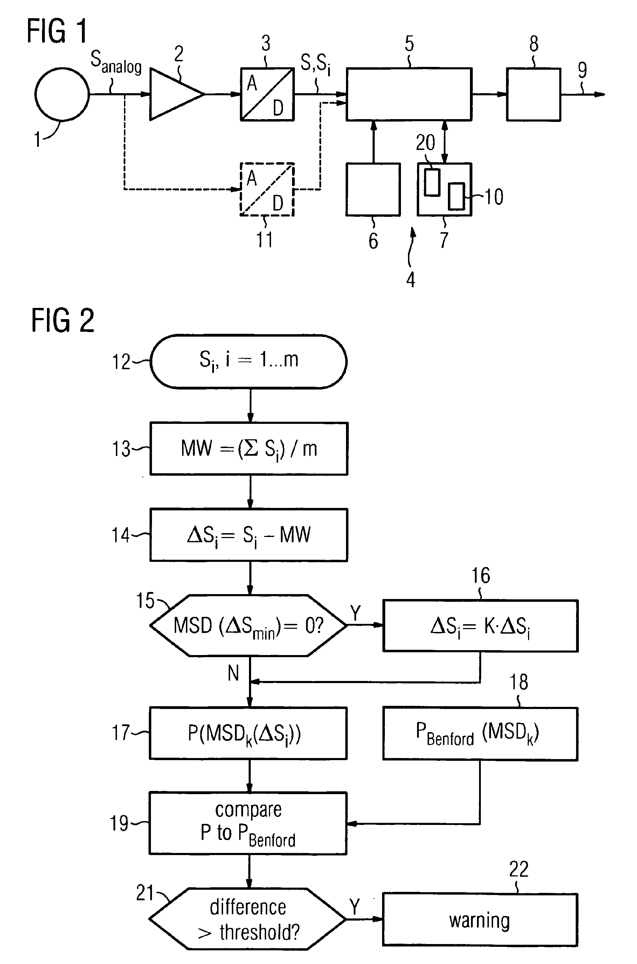

Figur 1 zeigt, vereinfacht als Blockschaltbild dargestellt, einen Messumformer mit einem Sensor 1, z. B. einen Drucksensor, der ein analoges Messsignal (Rohsignal) $S_{analog}$ liefert. Das analoge Messsignal $S_{analog}$ wird zunächst in einem analogen Messsignalverstärker 2 vorverstärkt und ggf. gefiltert, bevor es mittels eines Analog-/Digital-Umsetzers 3 in ein digitales Messsignal S mit Messwerten $S_i$ umgesetzt wird. In einer digitalen Signalverarbeitungseinrichtung 4 bestehend aus Mikroprozessor (CPU) 5, Arbeitsspeicher (RAM) 6 und Programmspeicher (ROM) 7 wird das digitale Messsignal S verstärkt, entzerrt, gefiltert, normiert und in ein zur Anzeige oder zur Versendung über eine Kommunikationsschnittstelle 8 geeignetes Ausgangssignal (Messumformersignal) 9 gebracht.

In dem Mikroprozessor 5 bzw. dem Programmspeicher 7 ist neben dem Signalbearbeitungsalgorithmus auch ein Algorithmus 10 zur Plausibilitätsprüfung des digitalen Messsignals S unter Anwendung des Benfordschen Gesetzes implementiert.

Für den Fall, dass die Vorverstärkung des analogen Messsignals $S_{analog}$ in dem Messsignalverstärker 2 nicht linear erfolgt und/oder eine Analogfilterung stattfindet, wird das analoge Messsignal $S_{analog}$ in einem separaten Analog-/Digital-Umsetzer 11 digitalisiert und der Signalverarbeitungseinrichtung 4 zur Plausibilitätsprüfung zugeführt.

Figur 2 zeigt in einem Flussdiagramm einzelne Schritte (Blöcke 12 bis 21) der Plausibilitätsprüfung des digitalen Messsignals S.

Zur Darstellung der digitalen Messwerte $S_i$ erfolgt in einem Zahlensystem mit der Basis b und n zur Verfügung stehenden Ziffernstellen, so dass gilt:

$$S_i = s_{n,i} \cdot b^n + s_{n-1,i} \cdot b^{n-1} + \ldots + s_{0,i} \cdot b^0 \quad ,$$

wobei $s_{n,i}$, $s_{n-1,i}$,..., $s_{0,i}$ die einzelnen Ziffern zwischen 0 und b-1 bezeichnen.

Zur Plausibilisierung des digitalisierten Messsignals S wird zunächst nach jedem N-ten Messwert $S_i$ der Mittelwert MW von m aufeinander folgenden Messwerten $S_i$ gebildet (Blöcke 12 und 13) :

$$MW = \frac{1}{m} \cdot \sum_{i=1}^{m} S_i \quad .$$

In einem nächsten Schritt werden die Abweichungen $\Delta S_i$ der m einzelnen Messwerte $S_i$ von dem Mittelwert MW berechnet (Block 14) :

$$\Delta S_i = S_i - MW \quad .$$

Wenn die führende Ziffer (MSD = most significant digit) $Z_{n,i}$ eines oder mehrerer Differenzwerte $\Delta S_i$ gleich Null ist, werden alle m Differenzwerte $\Delta S_i$ mit einem konstanten Faktor K multipliziert, der so gewählt ist, dass die jeweils führende Stelle $Z_{n,i}$ aller m Differenzwerte $\Delta S_i$ ungleich Null ist (Blöcke 15, 16). Weist z. B. der kleinste aller Messwerte, $S_{min}$, zwei führende Nullen auf, d. h. $\Delta S_{n,min} = \Delta S_{n-1,min} = 0$, $AS_{n-2,min} \neq 0$, so kann der Faktor $K = b^2$ gewählt werden.

Jetzt werden die Häufigkeiten P $(\Delta S_n, ... , \Delta S_{(k-1)})$ der k $(k \geq 1)$ führenden Ziffern $\Delta S_n, ..., \Delta S_{n-(k-1)}$ der, ggf. mit dem Faktor K multiplizierten m Differenzwerte $\Delta S_i$ mit der Benfordschen Häufigkeitsverteilung $P_{Benford}$ $(dn, .., dn-(k-1))$ für die k führenden Ziffern einer Zahl verglichen (Blöcke 17, 18, 19, wobei $MSD_k$ die k führenden Ziffern bezeichnet):

$$P_{Benford}\left(d_n, ..., d_{n-(k-1)}\right) = \log_b \left( 1 + \frac{1}{\sum_{j=1}^{k} d_{n-(j-1)} b^{n-(j-1)}} \right) \quad , \text{ mit } d = 1, 2, ..., b-1.$$

Wird, was in den meisten Fällen, insbesondere bei größerer Basis b ausreicht, nur die erste führende Ziffer $\Delta S_n$ berücksichtigt, so vereinfacht sich die Benford-Verteilung zu:

$$P_{Benford}\left(d_n\right) = \log_b \left( 1 + \frac{1}{d_n} \right) \quad .$$

Zum Beispiel ergibt sich nach Benford für die Basis b = 10 folgende Häufigkeitsverteilung der führenden Ziffer von Zahlen:

| $d_n$ | 1 | 2 | 3 | 4 | 5 | 6 | 7 | 8 | 9 |
|---|---|---|---|---|---|---|---|---|---|
| $P_{Benford}$ | 0,301 | 0,176 | 0,125 | 0,097 | 0,079 | 0,067 | 0,058 | 0,051 | 0,046 |

Die Benford-Verteilung $P_{Benford}$ $(dn, ..., dn-(k-1))$ ist z. B. als Tabelle 20 in einem der Speicher 6, 7 abgelegt.

Schließlich wird die Abweichung zwischen der Häufigkeitsverteilung $P(MSD_k(\Delta S_i))$ der k führenden Ziffern $MSD_k$ der m Differenzwerte $\Delta S_i$ und der Benfordschen Häufigkeitsverteilung $P_{Benford}$ $(MSD_k)$ ermittelt und eine Warnmeldung erzeugt, wenn die Abweichung einen Grenzwert übersteigt (Blöcke 21, 22).

Die Warnmeldung kann sofort ausgegeben oder mit weiteren Überwachungskriterien verknüpft werden, die erfüllt sein müssen, bevor die Warnmeldung ausgegeben wird.

Die Ermittlung der Abweichung zwischen den Häufigkeitsverteilungen kann beispielsweise über den Standardfehler oder den Chi-Quadrat-Test erfolgen, was jedoch bei kleineren Mikroprozessoren 5 zuviel Rechenleistung beanspruchen kann.

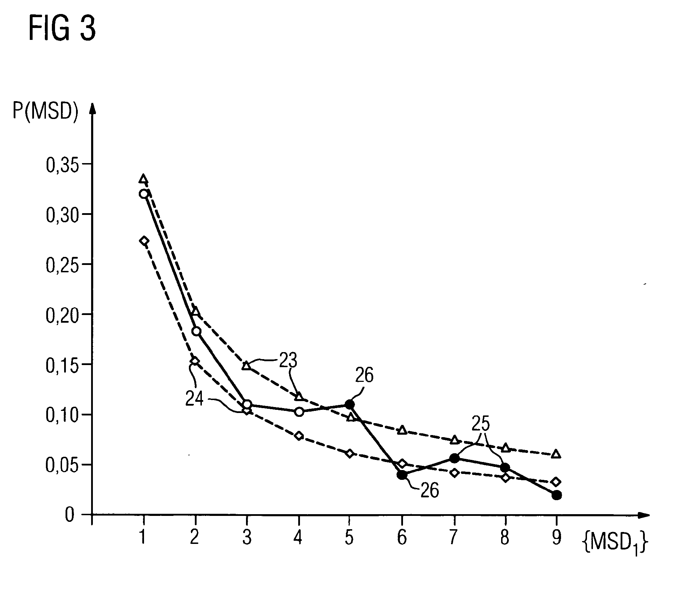

Figur 3 zeigt ein, das mit einem minimalen Rechenaufwand verbundenes Beispiel, bei dem ein Korridor mit einer oberen Grenze 23 und einer unteren Grenze 24 festgelegt wird, die oberhalb bzw. unterhalb der Benfordschen Häufigkeitsverteilung verlaufen. Bei dem gezeigten Beispiel wird die führende Ziffer $MSD_1$ der Differenzwerte $\Delta S_i$ mit Werten zwischen 1 und 9 betrachtet. Unter der Annahme, dass bei ungestörtem Messsignal S die ermittelten Häufigkeiten der führenden Ziffer der Differenzwerte $\Delta S_i$ einer Normalverteilung (Gauss-Verteilung) mit der Benford-Verteilung als Mittelwert unterliegen, können die Grenzen 23, 24 beispielsweise als zweifache Standardabweichung von der Benford-Verteilung festgelegt werden, so dass im störungsfreien Fall theoretisch etwa 95% der sich aus der Messung ergebenden Häufigkeitsverteilungen 25 der führenden Ziffer innerhalb des Korridors liegen. Ermittelte Häufigkeitsverteilungen 26 außerhalb des Korridors weisen dagegen auf eine Störung hin und führen zur Erzeugung der Warnmeldung. Der Korridor mit den Grenzen 23 und 24 wird vorab ermittelt und als Teil des Algorithmus 10 in dem Programmspeicher 7 abgelegt.

Da die niedrigeren Ziffernwerte mit höherer Wahrscheinlichkeit als die höheren Ziffernwerte auftreten, ist der Korridor im Bereich der niedrigeren Ziffernwerte prozentual enger. Aus diesem Grund wird es in vielen Fällen ausreichen, die Analyse nach Benford auf wenige, nämlich die niedrigsten Ziffernwerte, z. B. "1" und "2", oder sogar auf den niedrigsten Ziffernwert "1" zu beschränken. Im letzteren Fall ist dann nur noch eine einzige Vergleichsoperation erforderlich.

**Patentansprüche**

1. Verfahren zur Plausibilitätsprüfung von digitalen Messsignalen (S) in technischen Systemen mit folgenden Schritten:

- Bildung einer Trendfunktion (MW) für eine vorgegebene Anzahl von aufeinanderfolgenden Messwerten ($S_i$) des Messsignals (S),
- Bestimmung der Differenzwerte ($\Delta S_i$) zwischen den Messwerten ($S_i$) und der Trendfunktion (MW),
- falls die führende Ziffer (MSD) mindestens eines Differenzwerts ($\Delta S_i$) gleich Null ist, Multiplizieren aller Differenzwerte ($\Delta S_i$) mit einem Faktor (K), so dass die führenden Ziffern (MSD) aller Differenzwerte ($\Delta S_i$) ungleich Null sind,
- Ermittlung einer Abweichung zwischen der Häufigkeitsverteilung ($P(MSD_k (AS_i))$) der k ($k \geq 1$) führenden Ziffern ($MSD_k$) der Differenzwerte ($\Delta S_i$) und der Häufigkeitsverteilung ($P_{Benford} (MSD_k)$) nach dem Benfordschen Gesetz, und
- Erzeugen einer Warnmeldung (22), wenn die Abweichung einen Grenzwert übersteigt.

2. Verfahren zur Plausibilitätsprüfung von digitalen Messsignalen (S) in technischen Systemen mit folgenden Schritten:

- Bildung einer Trendfunktion (MW) für eine vorgegebene Anzahl von aufeinanderfolgenden Messwerten ($S_i$) des Messsignals (S),
- Bestimmung der Differenzwerte ($\Delta S_i$) zwischen den Messwerten ($S_i$) und der Trendfunktion (MW),
- Ermittlung der höchstwertigen Ziffernstelle, an der die Ziffern aller Differenzwerte ($\Delta S_i$) ungleich Null sind,
- Ermittlung einer Abweichung zwischen der Häufigkeitsverteilung ($P (MSD_k (\Delta S_i))$) der k ($k \geq 1$) führenden Ziffern ($MSD_k$) der Differenzwerte ($\Delta S_i$) von der ermittelten höchstwertigen Ziffernstelle ab und der Häufigkeitsverteilung ($P_{Benford} (MSD_k)$) nach dem Benfordschen Gesetz, und
- Erzeugen einer Warnmeldung (22), wenn die Abweichung einen Grenzwert übersteigt.

3. Verfahren nach Anspruch 1 oder 2, **dadurch gekennzeichnet, dass** die Plausibilitätsprüfung nach jedem N-ten (N $\geq$1) Messwert ($S_i$) des Messsignals (S) unter Hinzunahme der N neuen Messwerte ($S_i$) und unter Weglassung der jeweils N ältesten Messwerte ($S_i$) wiederholt wird.

4. Verfahren nach einem der vorangehenden Ansprüche, **dadurch gekennzeichnet, dass** die Plausibilitätsprüfung auf wenige niedrigste Ziffernwerte oder den niedrigsten Ziffernwert "1" der führenden Ziffer ($MSD_1$) beschränkt wird.

5. Verfahren nach einem der vorangehenden Ansprüche, **dadurch gekennzeichnet, dass** die Plausibilitätsprüfung auf die k' ($k' \geq 1$) letzten Ziffern ($LSD_{k'}$) der Messwerte ($S_i$) oder Differenzwerte ($\Delta S_i$) erweitert wird.

**Claims**

1. Method for checking the plausibility of digital measurement signals (S) in technical systems, having the following steps:

- a trend function (MW) is formed for a predefined number of successive measured values ($S_i$) of the measurement signal (S),
- the differential values ($\Delta S_i$) between the measured values ($S_i$) and the trend function (MW) are determined,
- if the leading digit (MSD) of at least one differential value ($\Delta S_i$) is equal to zero, all differential values ($\Delta S_i$) are multiplied by a factor (K), with the result that the leading digits (MSD) of all differential values ($\Delta S_i$) are not equal to zero,
- a difference between the frequency distribution ($P(MSD_k (\Delta S_i))$) of the k ($k \geq 1$) leading digits ($MSD_k$) of the differential values ($\Delta S_i$) and the frequency distribution ($P_{Benford} (MSD_k)$) according to Benford's law is determined, and
- a warning message (22) is generated if the difference exceeds a limit value.

2. Method for checking the plausibility of digital measurement signals (S) in technical systems, having the following steps:

- a trend function (MW) is formed for a predefined number of successive measured values ($S_i$) of the measurement signal (S),

- the differential values ($\Delta S_i$) between the measured values ($S_i$) and the trend function (MW) are determined,
- the most significant digit position at which the digits of all differential values ($\Delta S_i$) are not equal to zero is determined,
- a difference between the frequency distribution ($P(MSD_k (\Delta S_i))$) of the k (k $\geq$1) leading digits ($MSD_k$) of the differential values ($\Delta S_i$) from the determined most significant digit position on and the frequency distribution ($P_{Benford} (MSD_k)$) according to Benford's law is determined, and
- a warning message (22) is generated if the difference exceeds a limit value.

3. Method according to Claim 1 or 2, **characterized in that** the plausibility check is repeated after every Nth (N $\geq$1) measured value ($S_i$) of the measurement signal (S) with the addition of the N new measured values ($S_i$) and with the omission of the respective N oldest measured values ($S_i$).

4. Method according to one of the preceding claims, **characterized in that** the plausibility check is restricted to a few lowest numerical values or to the lowest numerical value "1" of the leading digit ($MSD_1$).

5. Method according to one of the preceding claims, **characterized in that** the plausibility check is extended to the k' (k' $\geq$ 1) last digits ($LSD_{k'}$) of the measured values ($S_i$) or differential values ($\Delta S_i$).

**Revendications**

1. Procédé de contrôle de la vraisemblance de signaux ( S ) de mesure numériques dans des systèmes techniques, comprenant les stades suivantes :

   - on forme une fonction ( MW ) de tendance pour un nombre prescrit de valeurs ( $S_i$ ) de mesure successives du signal ( S ) de mesure,
   - on détermine les valeurs ( $\Delta S_i$ ) de différence entre les valeurs ( $S_i$ ) de mesure et la fonction ( MW ) de tendance,
   - si le chiffre ( MSD ) guidant d'au moins une valeur ( $\Delta S_i$ ) de différence est égal à zéro, on multiplie toutes les valeurs ( $\Delta S_i$ ) de différence par un facteur ( K ) de manière à ce que les chiffres ( MSD ) guidant de toutes les valeurs ( $\Delta S_i$ ) de différence ne soient pas égaux à zéro,
   - on détermine un écart entre la répartition ($P(MSD_k (AS_i))$) de fréquence de k ( k $\geq$ 1 ) chiffres ( $MSD_k$ ) guidant des valeurs ( $\Delta S_i$ ) de différence et la répartition ($P_{Benford} (MSD_k)$) de fréquence suivant la loi de Benford, et
   - on produit un message ( 22 ) d'alerte si l'écart dépasse une valeur limite.

2. Procédé de contrôle de la vraisemblance de signaux ( S ) de mesure numériques dans des systèmes techniques, comprenant les stades suivantes :

   - on forme une fonction ( MW ) de tendance pour un nombre prescrit de valeurs ( $S_i$ ) de mesure successives du signal ( S ) de mesure,
   - on détermine les valeurs ( $\Delta S_i$ ) de différence entre les valeurs ( $S_i$ ) de mesure et la fonction ( MW ) de tendance,
   - on détermine la position de chiffre ayant la valeur la plus haute où les chiffres de toutes les valeurs ( $\Delta S_i$ ) de différence ne sont pas égaux à zéro,
   - on détermine un écart entre la répartition ($P(MSD_k (AS_i))$) de fréquence des k ( k $\geq$ 1 ) chiffres ( $MSD_K$ ) guidant des valeurs ( $\Delta S_i$ ) de différence dépendant de la position de chiffre la plus haute déterminée et de la répartition ($P_{Benford} (MSD_k)$) de fréquence suivant la loi de Benford, et
   - on produit un message ( 22 ) d'alerte si l'écart dépasse une valeur limite.

3. Procédé suivant la revendication 1 ou 2, **caractérisé en ce que** l'on répète le contrôle de vraisemblance après chaque nième ( N $\geq$ 1 ) valeur ( $S_i$ ) de mesure du signal ( S ) de mesure en ajoutant les N valeurs ( $S_i$ ) de mesure nouvelles et en omettant les respectivement N valeurs ( $S_i$ ) de mesure les plus anciennes.

4. Procédé suivant l'une des revendications précédentes, **caractérisé en ce que** l'on limite le contrôle de vraisemblance à quelques valeurs de chiffre les plus basses ou à la valeur de chiffre la plus basse « 1 » du chiffre ( $MSD_1$ ) guidant.

5. Procédé suivant l'une des revendications précédentes, **caractérisé en ce qu'**en étend le contrôle de vraisemblance au k' ( k' $\geq$ 1 ) dernier chiffre ( $LSD_k$' ) des valeurs ( $S_i$ ) de mesure ou des valeurs ( $\Delta S_i$ ) de différence.

## FIG 1

## FIG 2

12 — $S_i$, i = 1...m

13 — $MW = (\sum S_i) / m$

14 — $\Delta S_i = S_i - MW$

15 — MSD ($\Delta S_{min}$) = 0?

16 — $\Delta S_i = K \cdot \Delta S_i$

17 — $P(MSD_k(\Delta S_i))$

18 — $P_{Benford} (MSD_k)$

19 — compare P to $P_{Benford}$

21 — difference > threshold?

22 — warning

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080208946 A1